# EUROPEAN PATENT APPLICATION

(11) **EP 4 443 312 A1**
(43) Date of publication of application: **09.10.2024**
(21) Application number: 24168575.9
(22) Date of filing: 04.04.2024
(51) Int. Cl.: G06F 16/33, G06F 16/335

(54) **METHOD AND SYSTEM FOR PROVIDING ASSISTANCE TO A USER OF A MACHINE**

(30) Priority: 05.04.2023 IT 202300006711
(71) Applicant: SCM Group S.p.A., 47921 Rimini (RN) (IT)
(72) Inventor: MANDRELLI, Luca, c/o SCM Group S.p.A. - Via Emilia, 77 RIMINI - 47921 (IT)
(74) Representative: Gallo, Gianluca

(57) **Abstract**

A method for providing assistance for a user (2) of a processing machine (22) comprises the following steps, performed by a server computer (11): receiving a request text (24), representing the request for assistance from the user (2); processing the request text (24) through a natural language processing (NLP) engine, trained to extract values for a plurality of predetermined parameters, so as to generate an input vector containing the values thus extracted from the request text (24); accessing a database (12) containing a plurality of solution texts, each solution text constituting a predetermined reply to a possible request for assistance or to a type of request for assistance; selecting a solution text from the plurality of solution texts, dependently on the input vector, to make the selected solution text available to the user (2).

## Description

This invention relates to a maintenance method and system for providing assistance for a user of a processing machine.

In the context of processing machines, for example, for performing mechanical processes on wooden parts or for the continuous cycle production of objects, there is a need for users to be able to request assistance with regard to machine operation; for example, requests for assistance may regard a fault or malfunction, or a maintenance task to be performed, or even just help on how to operate the machine.

In this context, patent document US10650356B2 involves integrated circuits and an automatic remote service system. The patent document describes a system for automatically delivering a service and which comprises receiving requests in a server computer, for example, by email, and returning to a client computer a response generated by a processor which analyses the text received and extracts features from it. The patent document does not, however, deal directly with the problem of how to make generating the responses more efficient and, instead, the service system described always generates new responses to every new request.

Still in this context, patent document US2018/260760A1 describes an automatic remote service system. Even this patent document, however, does not deal directly with the problem of how to make generating the responses more efficient and, instead, the service system described always generates new responses to every new request.

In another patent document, namely EP3742247A1 which is in the name of the present Applicant and which is incorporated herein by reference, there is a context menu and a solution is described in which the machine automatically generates a request for service responsive to signals captured by its own sensor or error generating systems; this service request is sent to a remote server which, responsive to this automatic request, selects a multimedia document to send to the user. In this solution, however, the service requests are limited to the capability of the machine to generate the request, based on the sensor system it is provided with and on the software programmed into it. This solution does not therefore allow users to formulate requests at their own discretion; it does, however, simplify the way the service request is managed by the remote server.

Patent document EP3849139A1, in the name of the present Applicant, describes a solution in which the user can prepare a service request and transmit it to the remote server; this document thus deals with the problem of how to help the remote server manage such requests, which are quite diversified on account of the freedom that the user has in formulating the request. The solution to this problem, proposed by EP3849139A1, involves providing the remote server with a system to provide aid for filling in the request form; while the user is filling in the service request form, the system evaluates the correctness and completeness of the request in real time. This solution also has some limitations, however, linked, for example, to the quality of the Internet connection while the form is being filled in and to the user's freedom in formulating the request. EP3849139A1 also proposes to improve the quality of the service requests but does not deal directly with the problem of improving the efficiency of how to manage the requests received by the server.

The need therefore remains for more effective management of service requests, while leaving users ample freedom as to how the requests are formulated.

This invention has for an aim to provide a maintenance system and method that overcome the above mentioned disadvantages of the prior art.

This aim is fully achieved by the maintenance system and method of this disclosure as characterized in the appended claims.

This disclosure relates to a method for providing assistance for a user of a processing machine.

The method comprises a step of receiving a request text, representing the request for assistance from the user. The step of receiving is carried out by a server computer. Preferably, the server computer is (or includes) a remote server computer.

The request for assistance may regard a request for assistance following a machine fault or a malfunction, a request relating to operating instructions, a request for technical documentation, a request for a service offer or any other kind of request.

The method may comprise a step of receiving access information, the access information representing the user who is requesting assistance and/or the type of machine which the assistance is being requested for. The step of receiving access information may be carried out at the server computer. Preferably, the step of receiving access information is carried out before the step of receiving the request text.

The method comprises a step of processing the request text via the server computer. The step of processing the request text is carried out through a natural language processing (NLP) engine.

By "natural language processing", or NLP, is meant artificial intelligence algorithms capable of analysing, representing, hence understanding, natural language. Its purposes vary from understanding content, to translating and independently producing text starting from data or document input.

The method may comprise a step, via the server computer, of enabling automatic request management processes through the natural language processing engine; the processes may include automatically generating an offer, routing to dedicated queues for processing the request, and other processes.

The natural language processing (NLP) engine is trained to extract values for a plurality of predetermined parameters, preferably so as to generate an input vector. The input vector contains the values thus extracted from the request text.

The method comprises a step, via the server computer, of accessing a database containing a plurality of solution texts. Each solution text constitutes a predetermined reply to a possible request for assistance or to a type of request for assistance.

The method comprises a step, via the server computer, of selecting a solution text from the plurality of solution texts. The step of selecting a solution text from the plurality of solution texts may be carried out dependently on the input vector. The step of selecting a solution text is carried out to make the selected solution text available to the user. For example, the method may include a step of generating an input vector (that is, the aforesaid input vector) containing the values extracted from the request text and from the access information; in other words, the method may comprise a step, via the server computer, of processing the request text to generate an input vector containing the values thus extracted from the request text and from the access information. In an embodiment, the step of selecting the solution text is carried out dependently also on the access information.

The database may be provided with a reference dataset. The reference dataset may include a respective solution vector for each solution text. The solution vector may be made up of values of the plurality of predetermined parameters extracted from that solution text by the NLP engine. Preferably, the step of selecting is carried out dependently also on the reference dataset.

In an example, the step of selecting is carried out by a selector. Preferably, the selector includes a machine-learned model. The method may comprise a step of learning by the machine-learned model. The step of learning may be carried out responsive to a reaction signal received by the server computer, the reaction signal representing an evaluation by the user of the selected solution text.

For example, the database may include a list of predetermined categories of possible requests from the user. The possible requests from the user may include one or more items from the following list: faults, machine malfunctioning, operating instructions, technical documentation, a request for a service offer and other request categories. The server computer may perform a step of categorizing, in which it processes the request text to derive therefrom a degree of matching the predetermined categories. The machine-learned model may assign a confidence level to the selection. The server computer may perform a step of generating a message for the user, preferably dependently on the result of the step of categorizing. For example, the step of generating the message for the user may be carried out dependently on a preset condition being satisfied by the confidence level on the selection text. Preferably, the step of generating the message for the user is carried out if the confidence level on the selection text is less than a predetermined threshold value or if the reaction signal is negative.

In an example, if the confidence level on the selection text is less than a predetermined threshold value or if the reaction signal is negative, the method may comprise a step of enabling automatic request management processes. The automatic processes may include automatically generating a service offer and/or routing the request to specific queues and other processes.

The step of categorizing may be performed by the NLP engine. The NLP engine may also be trained to derive the degree of matching the predetermined categories of the request texts.

In an example, the plurality of predetermined parameters includes semantic data, that could be unstructured data.

In an example, the method comprises a step of receiving access information, the access information representing the user who is requesting assistance and/or the type of machine which the assistance is being requested for. Selection of a solution text may be carried out dependently also on the access information.

The selector, that is the server computer, generates from the input vector an enriched input vector, where the enriched input vector includes structured metadata. The structured metadata are derived from the access information. Thus, the structured metadata may be representative of information about the user who is requesting assistance and/or about the type of machine which the assistance is being requested for.

This disclosure also provides a maintenance system for providing assistance for a user of a processing machine.

The system comprises a server computer and a database containing a plurality of solution texts. Each solution text constitutes a predetermined reply to a possible request for assistance or to a type of request for assistance.

The server computer is configured to receive a request text, for example, through a communication system. The request text represents the request for assistance from the user.

The server computer may be configured to receive access information. The access information may represent the user who is requesting assistance and/or the type of machine which the assistance is being requested for.

The server computer is programmed to process the request text. The server computer may process the request text through a natural language processing (NLP) engine. The natural language processing (NLP) engine is trained to extract values for a plurality of predetermined parameters, preferably so as to generate an input vector containing the values thus extracted from the request text.

The system includes a selector programmed to select a solution text from the plurality of solution texts, preferably dependently on the input vector. The selector may be configured to access the database. In particular, the selector may be programmed to select a solution text of the plurality of solution texts dependently also on the access information.

The system is configured to make the selected solution text available to the user.

The server computer may be programmed to enable automatic request management processes through the natural language processing engine, where the processes may include automatically generating an offer, routing to dedicated queues for processing the request, and other processes.

The database may be provided with a reference dataset. The reference dataset may include a respective solution vector for each solution text. The solution vector may be made up of values of the plurality of predetermined parameters extracted from that solution text by the NLP engine. Preferably, the selector is programmed to process the input vector based on the reference dataset.

In an example embodiment of the system, the database includes a list of predetermined categories of possible requests from the user. The possible requests from the user may include one or more items from the following list: faults, machine malfunctioning, operating instructions, technical documentation, a request for a service offer and other request categories. The server computer may be programmed to perform a step of categorizing. In the step of categorizing, the server computer processes the request text to derive a degree of matching the predetermined categories. The selector may be programmed to assign a confidence level to the selection. The server computer may be programmed to generate a message for the user, dependently on the result of the step of categorizing. For example, the server computer may be programmed to generate the message for the user dependently on a preset condition being satisfied by the confidence level on the selection text. Preferably, the server computer is programmed to generate the message if the confidence level on the selection text is less than a predetermined threshold value. In an example, if the confidence level on the selection text is less than a predetermined threshold value or if the reaction signal is negative, the server computer may be programmed to enable automatic request management processes. The automatic processes may include automatically generating a service offer and/or routing the request to specific queues and other processes.

The NLP engine may be programmed to perform the step of categorizing and may be trained to derive the degree of matching the predetermined categories of the request texts.

In an example, the server computer is configured to receive, through a communication system, access information representing the user who is requesting assistance and/or the type of machine which the assistance is being requested for. The selector may be programmed to select the solution text dependently also on the access information.

In an embodiment, the selector is programmed to generate from the input vector an enriched input vector that includes structured metadata derived from the access information.

For example, the server computer may be programmed to generate a reaction request and is configured to receive a reaction signal representing an evaluation by the user of the selected solution text. The selector may include a machine-learned model programmed to self-learn on the basis of the reaction signal.

This description also provides a computer program including instructions configured to perform the steps of the method according to one or more of the aspects of this disclosure when run on the server computer according to one or more of the aspects of this disclosure.

This disclosure also provides a method for obtaining assistance for a processing machine. The method comprises a step, performed by a client computer, of receiving login credentials entered by the user.

In particular, the client computer is accessible by a machine user and is intended to exchange information with a server computer through a communication system.

The method comprises a step, performed by the client computer, of validating login credentials entered by the user.

The method comprises a step, performed by the client computer, responsive to a result of validating the login credentials, of providing access information representing the user who is requesting assistance and the type of machine which the assistance is being requested for. The method comprises a step, performed by the client computer, responsive to a result of validating the login credentials, of enabling the user to enter a request text, representing the request for assistance from the user.

The method comprises a step, via the client computer or the server computer, of processing the request text through a natural language processing (NLP) engine, trained to extract values for a plurality of predetermined parameters, so as to generate an input vector containing the values thus extracted from the request text.

The method comprises a step, via the client computer or the server computer, of accessing a database containing a plurality of solution texts, each solution text constituting a predetermined reply to a possible request for assistance or to a type of request for assistance.

The method comprises a step, via the client computer or the server computer, of selecting a solution text from the plurality of solution texts dependently on the input vector and on the access information.

The method comprises a step, via the client computer or the server computer, of making the selected solution text available to the user.

This description also provides a computer program including instructions configured to perform the steps of the method for obtaining assistance for a processing machine according to one or more of the features described in this disclosure.

This disclosure also provides a method for providing assistance for a user of a processing machine. The method comprises a step, performed by a client computer, of receiving login credentials entered by the user. In particular, the client computer is accessible by a machine user. The method comprises a step, performed by the client computer, of validating the login credentials.

The method comprises a step, performed by the client computer, responsive to a result of validating the login credentials, of providing access information representing the user who is requesting assistance and the type of machine which the assistance is being requested for.

The method comprises a step, performed by the client computer, responsive to a result of validating the login credentials, of enabling the user to enter a request text, representing the request for assistance from the user.

The method comprises a step, performed by the server computer, of receiving the access information and the request text. The method comprises a step, via the server computer, of processing the request text through a natural language processing (NLP) engine, trained to extract values for a plurality of predetermined parameters, so as to generate an input vector containing the values thus extracted from the request text.

The method comprises a step, via the server computer, of accessing a database containing a plurality of solution texts, each solution text constituting a predetermined reply to a possible request for assistance or to a type of request for assistance.

The method comprises a step, via the server computer, of selecting a solution text from the plurality of solution texts dependently on the input vector and/or on the access information, to make the selected solution text available to the user.

This and other features will become more apparent from the following description of a preferred embodiment, illustrated purely by way of nonlimiting example in the accompanying drawings, in which:

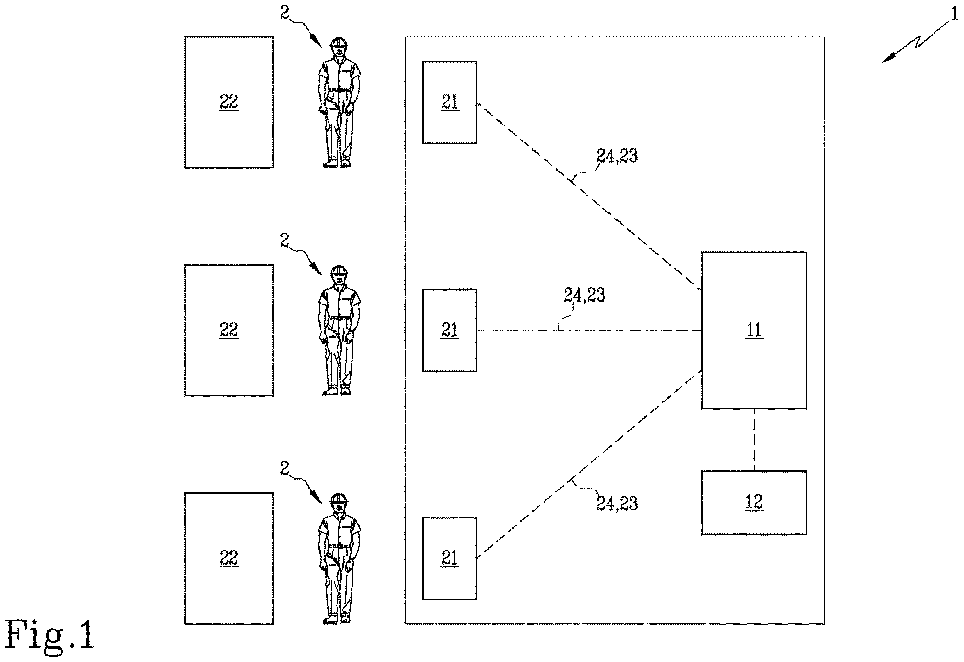

- Figure 1 schematically represents a system for providing assistance for a user of a processing machine according to one or more features of this disclosure;

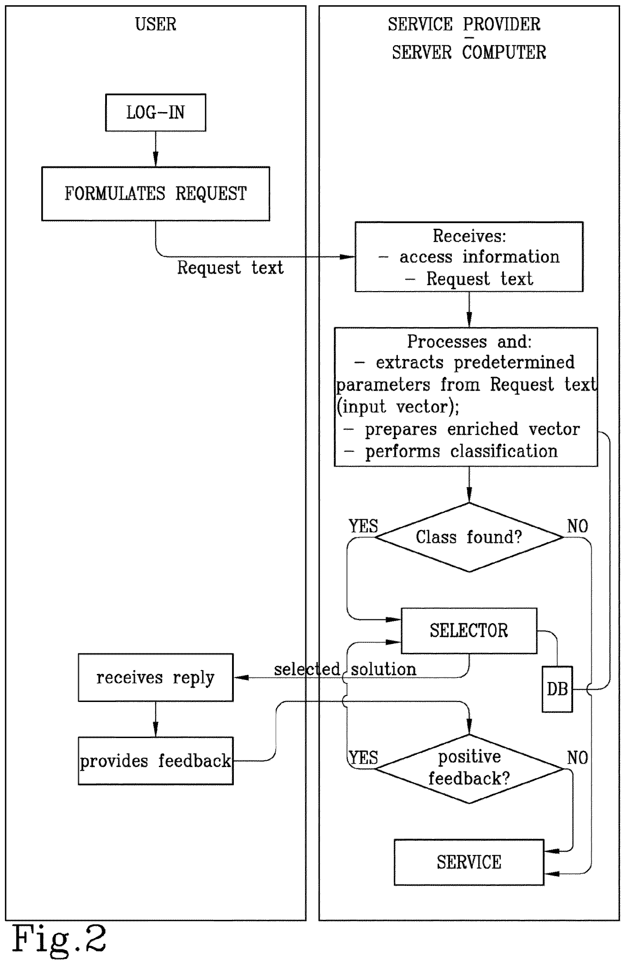

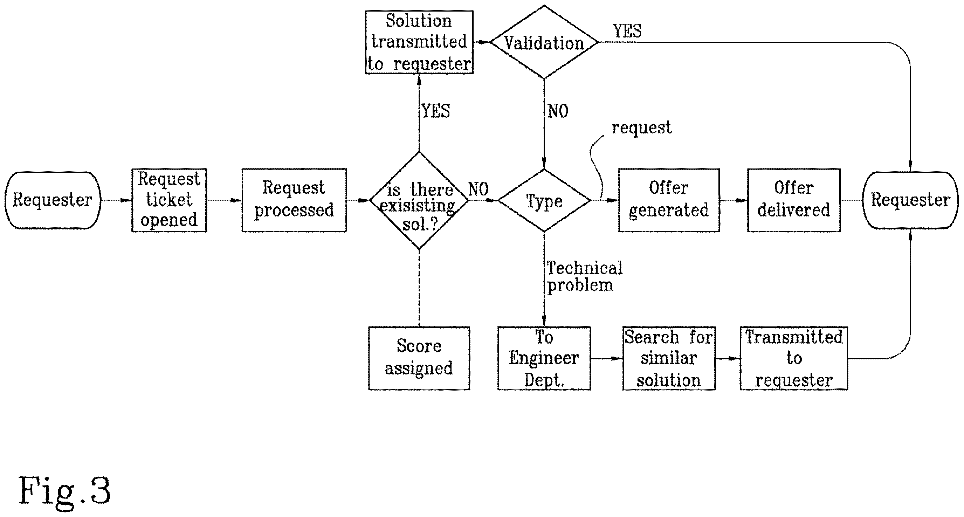

- Figure 2 and Figure 3 are block diagrams representing an operating sequence of the system for providing assistance according to one or more aspects of this disclosure;
- Figure 4 represents a step of learning of the machine-learned model according to one or more aspects of this disclosure.

The numeral 1 in the drawings denotes a system for providing assistance for a user 2 of a processing machine 22. The system 1 comprises a client computer 21, which is accessible by the user 2, and a server computer 11; the system 1 comprises a database 12, which is accessible (at least partly) by the client computer 21 and by the server computer 11. The client computer 21 is intended to exchange information with the server computer 11 through a communication system.

The user 2 may access the client computer 21 through a personal tablet, a personal computer, a computer associated with the machine 22 or any other suitable device.

Using, for example, the personal computer or the computer associated with the machine 22, the user 2 logs in to a portal of a client computer 21 accessible by the user 2 by entering the login credentials when inside the portal.

The client computer 21 receives the login credentials and accesses the database 12 containing the login credentials of a plurality of users 2 and compares the login credentials entered by the user 2 with the login credentials of that user 2 in the database 12 so as to validate the login credentials entered by that user 2.

Responsive to a result of validating the login credentials, access information 23 is provided which represents the user 2 who is requesting assistance and the type of machine 22 which the assistance is being requested for. Further, once the login credentials are validated, the user 2 is enabled to receive a request text 24 representing the request for assistance from that user 2.

The request text may regard a request for assistance following a fault or a malfunction of the machine 22, a request relating to operating instructions for the machine 22, a request for technical documentation of the machine 22, a request for a service offer or any other category of request.

The server computer 11 receives the access information 23 and the request text 24. After receiving the request text 24, the server computer 11 generates a ticket associated with the request for assistance.

The server computer 11 processes the request text 24 through a natural language processing (NLP) engine trained to extract values for a plurality of predetermined parameters. In particular, when processing the request text 24, the values for a plurality of predetermined parameters are extracted by semantically analysing the request text 24.

The plurality of predetermined parameters comprises semantic metadata, which may include, for that request text: a request category, chosen from a list of predetermined request categories; elements associated with the use of the machine (for example, error messages) chosen from a list of elements associated with the use of the machine 22; predetermined expressions, chosen from a list of predetermined expressions (for example, expressions in the jargon of the trade); and other information chosen from a company database (for example, containing types of machines 22, registration data of users 2, markets, and other data derived from a company management program). For example, the request category may be derived by the server computer 11 through the NLP engine by a step of categorizing in which it associates the request text with a category from a list of predetermined categories contained in the database 12 (that is, it processes the request text 24 to derive therefrom a degree of matching the predetermined categories). For this purpose, the database 12 includes a list of predetermined categories of faults or malfunctions of the machine 22, modes of using the machine 22, technical documentation of the machine 22, service offer requests and other categories.

The values thus extracted during the processing of the request text 24 are used by the server computer 11 to generate an input vector containing said values.

Furthermore, when the request text 24 is being processed, the access information 23 and the input vector generated from the request text 24 are used by the server computer 11 to generate an enriched vector. Therefore, the enriched vector comprises both the values for the predetermined parameters and the access information 23, and thus the vector depends both on the information derived from the request text 24 and on the information about the user 2 who has requested assistance, and possibly also about the type of machine 22 (if the user 2 has requested technical assistance for a specific machine 22).

The database 12 comprises a plurality of solution texts; each solution text constitutes a predetermined reply to a possible request for assistance or to a type of request for assistance. The server computer 11 selects a solution text from the plurality of solution texts dependently on the input vector (in particular, the enriched input vector) by means of a selector including a machine-learned model.

The database 12 comprises a reference dataset which includes a solution vector for each solution text of the plurality of solution texts contained in the database 12. Each solution vector is made up of values of the plurality of predetermined parameters associated with its own solution text through the NLP engine. In particular, each solution text contained in the database 12 has been processed previously (that is, previous to the request for assistance) to assign the respective solution vector to it, through a step of training the NLP engine comprising a step CM of manually categorizing a plurality of solution texts.

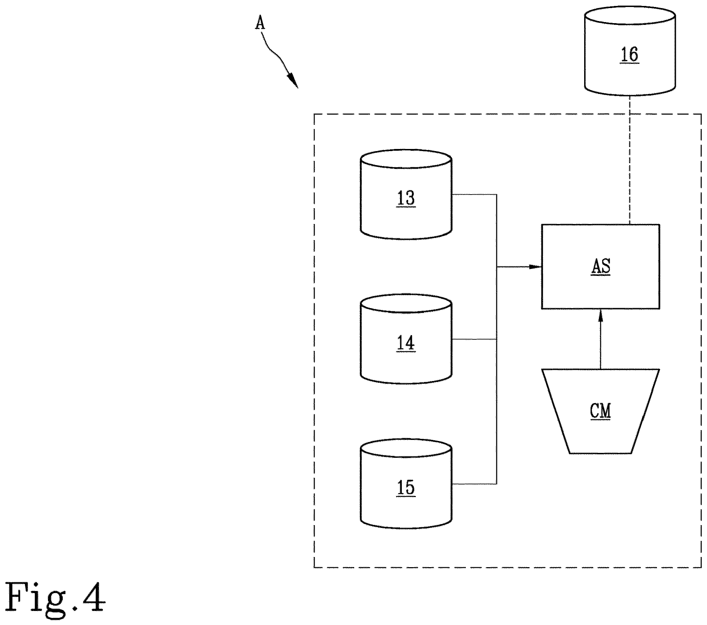

Figure 4 shows, schematically and purely by way of illustration, a step A of training the NLP engine.

During the step A of training the NLP engine, the NLP engine receives a list 13 of predetermined request categories, a list of elements 14 associated with the use of the machine 22 (for example, error messages), a list of predetermined expressions 15 (for example, expressions in the jargon of the trade), and a company database 16 (for example, containing types of machines 22, registration data of users 2, markets, and other data derived from a company management program). In the step CM of manually categorizing, each solution text is processed by an operator who manually associates the solution text with a category (of the predetermined categories). In the step A of training, the NLP engine is trained to analyse each solution text using the list of elements 14 associated with the use of the machine 22, the list of predetermined expressions 15 and the company database 16 through a step AS of supervised learning. Through the step CM of manually categorizing and analysing the solution text, the solution vector associated with that solution text is processed. It should be noted that the set of solution vectors thus processed constitutes (that is, is included in) a reference dataset contained in the database 12.

The selector is configured to select the solution text on the basis of an algorithm based on a weighted distance between the solution vectors and the input vector (or the enriched vector) resulting from the processing of the request text 24.

The selected solution text is transmitted to the user 2 and the user 2 is enabled, through the client computer 21, to transmit a reaction (or feedback) signal representing an evaluation by the user 2 of the selected solution text. The reaction signal may be positive or negative.

The step A of training may be further carried out responsive to the reaction signal received at the server computer 11.

If the reaction signal is negative, the server computer 11 may generate a message for the user 2; the message for the user 2 may regard a service offer for the user 2 or a routing to specific queues and other kinds of service. In an embodiment, the NLP engine assigns a confidence level (that is, assigns a score) to the selection of the solution text; if the confidence level on the selection text is less than a predetermined threshold value, the server computer 11 may generate a message for the user 2 making a service offer to the user or the request can be automatically routed to specific queues and other types of services.

The NLP engine may also derive a degree of matching the predetermined categories of the request texts. The degree of matching may be negative or positive; if the degree of matching is positive, the server computer 11 proceeds to searching for the most appropriate solution text. If the degree of matching is negative, the server computer 11 generates the message for the user 2.

The server computer 11 may be configured to modify the weights of the algorithm based on the distance, based on the reaction signal from the user 2 and/or based on the confidence level.

## Claims

1. A method for providing assistance for a user (2) of a processing machine (22), comprising the following steps performed by a server computer (11):
- receiving a request text (24), representing the request for assistance from the user (2);
- processing the request text (24) through a natural language processing (NLP) engine, trained to extract values for a plurality of predetermined parameters, so as to generate an input vector containing the values thus extracted from the request text (24);
- accessing a database (12) containing a plurality of solution texts, each solution text constituting a predetermined reply to a possible request for assistance or to a type of request for assistance;
- selecting a solution text from the plurality of solution texts, dependently on the input vector, to make the selected solution text available to the user (2).

2. The method according to claim 1, wherein the database (12) is provided with a reference dataset including, for each solution text, a respective solution vector, made up of values of the plurality of predetermined parameters extracted from that solution text by the NLP engine, the step of selecting being carried out dependently also on the reference dataset.

3. The method according to claim 2, wherein the step of selecting is carried out by a selector including a machine-learned model, the method further comprising a step of learning by the machine-learned model responsive to a reaction signal received by the server computer (11), the reaction signal representing an evaluation by the user (2) of the selected solution text.

4. The method according to claim 3, wherein
the database (12) includes a list of predetermined categories of possible requests from the user (2);
the server computer (11) performs a step of categorizing, in which it processes the request text (24) to derive therefrom a degree of matching the predetermined categories,
the machine-learned model assigns a confidence level to the selection,
if the confidence level on the selection text is less than a predetermined threshold value or if the reaction signal is negative, the server computer (11) performs a step of generating a message for the user (2) dependently on the result of the step of categorizing.

5. The method according to claim 4, wherein categorization is performed by the NLP engine, the NLP engine being also trained to derive from it the degree of matching the predetermined categories of the request texts (24).

6. The method according to one or more of the preceding claims, wherein the plurality of predetermined parameters includes semantic metadata.

7. The method according to one or more of the preceding claims, further comprising a step of receiving access information (23), representing the user (2) who is requesting assistance and the type of machine (22) which the assistance is being requested for, wherein the step of selecting a solution text is carried out also dependently on the access information (23).

8. The method according to claim 7, wherein, the selector generates from the input vector an enriched input vector that includes structured metadata derived from the access information (23).

9. A maintenance system (1) for providing assistance for a user (2) of a processing machine (22), comprising a server computer (11) and a database (12) containing a plurality of solution texts, each solution text constituting a predetermined reply to a possible request for assistance or to a type of request for assistance, wherein the server computer (11)
is configured to receive, through a communication system, a request text (24) representing the request for assistance from the user (2), and access information (23) representing the user (2) who is requesting assistance and the type of machine (22) which the assistance is being requested for,
is programmed to process the request text (24) through a natural language processing (NLP) engine, trained to extract values for a plurality of predetermined parameters, so as to generate an input vector containing the values thus extracted from the request text (24),
includes a selector programmed to select a solution text from the plurality of solution texts dependently on the input vector and on the access information (23);
is configured to make the selected solution text available to the user (2).

10. The maintenance system (1) according to claim 9, wherein the database (12) is provided with a reference dataset including, for each solution text, a respective solution vector, made up of values of the plurality of predetermined parameters extracted from that solution text by the NLP engine, and wherein the selector is programmed to process the input vector based on the reference dataset.

11. The system according to claim 9 or 10, wherein
- the database (12) includes a list of predetermined categories of possible requests from the user (2);
- the server computer (11) is programmed to perform a step of categorizing, in which it processes the request text (24) to derive therefrom a degree of matching the predetermined categories,
- the selector is programmed to assign a confidence level to the selection,
- the server computer (11) is also programmed to generate a message for the user (2), dependently on the result of the step of categorizing, if the confidence level on the selection text is less than a predetermined threshold value.

12. The system (1) according to one or more of claims 9 to 11, wherein the server computer (11) is configured to receive, through the communication system, access information (23) representing the user (2) who is requesting assistance and the type of machine (22) which the assistance is being requested for, and wherein the selector is programmed to select the solution text also dependently on the access information (23).

13. The system (1) according to any one of claims 9 to 12, wherein
- the server computer (11) is programmed to generate a reaction request and is configured to receive a reaction signal representing an evaluation by the user (2) of the selected solution text;
- the selector includes a machine-learned model programmed to self-learn on the basis of the reaction signal.

14. A computer program including instructions configured for executing the steps of the method according to one or more of claims 1 to 8 when run on the server computer (11) according to one or more of claims 9 to 13.

15. A method for obtaining assistance for a processing machine (22), the method comprising the following steps, performed by a client computer (21) accessible by a user (2) of the machine (22) and configured to exchange information with a server computer (11) through a communication system:
- receiving and validating login credentials entered by the user (2);
- responsive to a result of validating the login credentials, providing access information (23) representing the user (2) who is requesting assistance and the type of machine (22) which the assistance is being requested for;
- responsive to a result of validating the login credentials, enabling the user (2) to enter a request text (24), representing the request for assistance from the user (2);
- via the client computer (21) or the server computer (11), processing the request text (24) through a natural language processing (NLP) engine, trained to extract values for a plurality of predetermined parameters, so as to generate an input vector containing the values thus extracted from the request text (24);
- via the client computer (21) or the server computer (11), accessing a database (12) containing a plurality of solution texts, each solution text constituting a predetermined reply to a possible request for assistance or to a type of request for assistance;
- via the client computer (21) or the server computer (11), selecting a solution text from the plurality of solution texts dependently on the input vector and on the access information (23);
- making the selected solution text available to the user (2).

16. A computer program including instructions configured for executing the steps of the method according to claim 15.

17. A method for providing assistance for a user (2) of a processing machine (22), the method comprising the following steps:
via a client computer (21) accessible to a user (2) of the machine (22),
- receiving and validating login credentials entered by the user (2);
- responsive to a result of validating the login credentials, providing access information (23) representing the user (2) who is requesting assistance and the type of machine (22) which the assistance is being requested for;
- responsive to a result of validating the login credentials, enabling the user (2) to enter a request text (24), representing the request for assistance from the user (2);
via a server computer (11),
- receiving the access information (23) and the request text (24);
- processing the request text (24) through a natural language processing (NLP) engine, trained to extract values for a plurality of predetermined parameters, so as to generate an input vector containing the values thus extracted from the request text (24);
- accessing a database (12) containing a plurality of solution texts, each solution text constituting a predetermined reply to a possible request for assistance or to a type of request for assistance;
- selecting a solution text from the plurality of solution texts, dependently on the input vector and on the access information (23), to make the selected solution text available to the user.
